# FASCICULE DE BREVET EUROPEEN

(11) **EP 3 118 062 B1**
(45) Date de publication et mention de la délivrance du brevet: **20.06.2018**
(21) Numéro de dépôt: 16178490.5
(22) Date de dépôt: 07.07.2016
(51) Int. Cl.: B60R 5/04

(54) **DISPOSITIF DE RECOUVREMENT D'UN COMPARTIMENT À BAGAGES DE VÉHICULE AUTOMOBILE**
ABDECKVORRICHTUNG EINES KOFFERRAUMABTEILS EINES KRAFTFAHRZEUGS
DEVICE FOR COVERING A LUGGAGE COMPARTMENT OF A MOTOR VEHICLE

(30) Priorité: 17.07.2015 FR 1556804
(43) Date de publication de la demande: 18.01.2017
(73) Titulaire: Cera APS, 51100 Reims (FR)
(72) Inventeur: BONFILS, Xavier, 51100 Reims (FR); BRILLON, Eric, 51390 Rosnay (FR)
(74) Mandataire: Sayettat, Julien Christian

(56) Documents cités:
- EP-A1- 2 724 892
- WO-A1-2012/108241
- JP-A- 2013 103 679
- KR-B1- 100 946 518

## Description

Il est connu de réaliser un dispositif de recouvrement d'un compartiment à bagages de véhicule automobile, ledit dispositif comprenant :
- un rideau souple de recouvrement des bagages actionnable entre une configuration déployée de recouvrement et une configuration rétractée de rangement,
- un carter de réception dudit rideau en configuration de rangement,
- deux embouts montés en extrémités dudit carter, lesdits embouts étant chacun pourvu d'un moyen de fixation destiné à coopérer avec un moyen de fixation réciproque prévu en avant d'une ébénisterie latérale respective de garnissage dudit compartiment, afin de permettre une fixation réversible dudit carter sur lesdites ébénisteries,
- un arbre transversal d'enroulement dudit rideau pour le recevoir en configuration rétractée, ledit arbre étant solidaire d'un bord avant dudit rideau, ledit arbre étant monté en rotation par ses extrémités sur lesdits embouts, ledit arbre étant actionné en enroulement par un moyen ressort,
- une plaque de rigidification d'un bord arrière dudit rideau,
- au moins un premier et un deuxième moyen d'emboitement réciproques respectivement solidaires de ladite plaque et dudit carter ou inversement, lesdits moyens étant mis en coopération par mise dudit rideau en configuration rétractée de manière à permettre un maintien de ladite plaque en position sensiblement horizontale.
Un tel dispositif est décrit dans EP-A1-2724892. Avec un tel dispositif, la plaque est maintenue sensiblement horizontale quand le rideau est en configuration rétractée, ce qui évite qu'elle puisse osciller sous l'effet des vibrations du véhicule en roulage et générer des bruits parasites.
Cependant, les dispositifs connus n'assurent qu'un emboitement précaire qui ne permet pas, après démontage, leur transport par préhension de la plaque sans avoir un risque de déboitement entre le carter et ladite plaque, ce qui provoque un ressenti désagréable pour l'utilisateur.

L'invention a pour but de pallier cet inconvénient.

A cet effet, l'invention propose un dispositif de recouvrement d'un compartiment à bagages de véhicule automobile, ledit dispositif comprenant :
- un rideau souple de recouvrement des bagages actionnable entre une configuration déployée de recouvrement et une configuration rétractée de rangement,
- un carter de réception dudit rideau en configuration de rangement,
- deux embouts montés en extrémités dudit carter, lesdits embouts étant chacun pourvu d'un moyen de fixation destiné à coopérer avec un moyen de fixation réciproque prévu en avant d'une ébénisterie latérale respective de garnissage dudit compartiment, afin de permettre une fixation réversible dudit carter sur lesdites ébénisteries,
- un arbre transversal d'enroulement dudit rideau pour le recevoir en configuration rétractée, ledit arbre étant solidaire d'un bord avant dudit rideau, ledit arbre étant monté en rotation par ses extrémités sur lesdits embouts, ledit arbre étant actionné en enroulement par un moyen ressort,
- une plaque de rigidification d'un bord arrière dudit rideau,
- au moins un premier et un deuxième moyen d'emboitement réciproques respectivement solidaires de ladite plaque et dudit carter ou inversement, lesdits moyens étant mis en coopération par mise dudit rideau en configuration rétractée de manière à permettre un maintien de ladite plaque en position sensiblement horizontale,
ledit premier moyen présentant un logement de réception dudit deuxième moyen, ledit logement étant pourvu d'un goulot d'étranglement élastiquement déformable, ledit deuxième moyen présentant une géométrie agencée pour permettre un élargissement dudit goulot lors de son introduction dans ledit logement et pour permettre un retour dudit goulot en configuration non déformée une fois emboité, de manière à bloquer ledit deuxième moyen dans ledit logement et à permettre un transport dudit dispositif une fois démonté par préhension de ladite plaque.

Dans cette description, les termes de positionnement dans l'espace (transversal, latéral, avant, arrière, horizontal, vertical,...) sont pris en référence au dispositif monté dans le véhicule.

Un tel agencement met en oeuvre un effet de « point dur » qui permet une solidarisation robuste entre le carter et la plaque.

De ce fait, le dispositif une fois démonté du véhicule peut être transporté par préhension de la plaque, et ceci sans risque de déboitement entre ledit carter et ladite plaque ; il en résulte un ressenti avantageux pour l'utilisateur.

D'autres particularités et avantages de l'invention apparaîtront dans la description qui suit, faite en référence aux figures jointes, dans lesquelles :
- la figure 1 est une vue schématique en perspective d'un dispositif selon une réalisation, ledit dispositif étant monté dans un véhicule, le rideau étant en configuration semi-déployée,
- la figure 2 est une vue en perspective partielle du dispositif de la figure 1 montrant les moyens d'emboitement réciproques emboités entre eux,
- la figure 3 est une vue schématique latérale du dispositif de la figure 1, les moyens d'emboitement réciproques étant emboités entre eux,
- la figure 4 est une vue analogue à la figure 3, les moyens d'emboitement étant déboités et la plaque étant disposée en position sensiblement verticale.

En référence aux figures, on décrit un dispositif 1 de recouvrement d'un compartiment à bagages de véhicule automobile, ledit dispositif comprenant :
- un rideau 2 souple de recouvrement des bagages actionnable entre une configuration déployée de recouvrement et une configuration rétractée de rangement,
- un carter 3 de réception dudit rideau en configuration de rangement,
- deux embouts 4 montés en extrémités dudit carter, lesdits embouts étant chacun pourvu d'un moyen de fixation 5 destiné à coopérer avec un moyen de fixation réciproque 6 prévu en avant d'une ébénisterie 7 latérale respective de garnissage dudit compartiment, afin de permettre une fixation réversible dudit carter sur lesdites ébénisteries,
- un arbre 8 transversal d'enroulement dudit rideau pour le recevoir en configuration rétractée, ledit arbre étant solidaire d'un bord avant dudit rideau, ledit arbre étant monté en rotation par ses extrémités sur lesdits embouts, ledit arbre étant actionné en enroulement par un moyen ressort non représenté,
- une plaque 9 de rigidification d'un bord arrière dudit rideau,
- au moins un premier 10 et un deuxième 11 moyen d'emboitement réciproques respectivement solidaires de ladite plaque et dudit carter ou inversement, lesdits moyens étant mis en coopération par mise dudit rideau en configuration rétractée de manière à permettre un maintien de ladite plaque en position sensiblement horizontale,
ledit premier moyen présentant un logement 12 de réception dudit deuxième moyen, ledit logement étant pourvu d'un goulot d'étranglement 13 élastiquement déformable, ledit deuxième moyen présentant une géométrie agencée pour permettre un élargissement dudit goulot lors de son introduction dans ledit logement et pour permettre un retour dudit goulot en configuration non déformée une fois emboité, de manière à bloquer ledit deuxième moyen dans ledit logement et à permettre un transport dudit dispositif une fois démonté par préhension de ladite plaque.

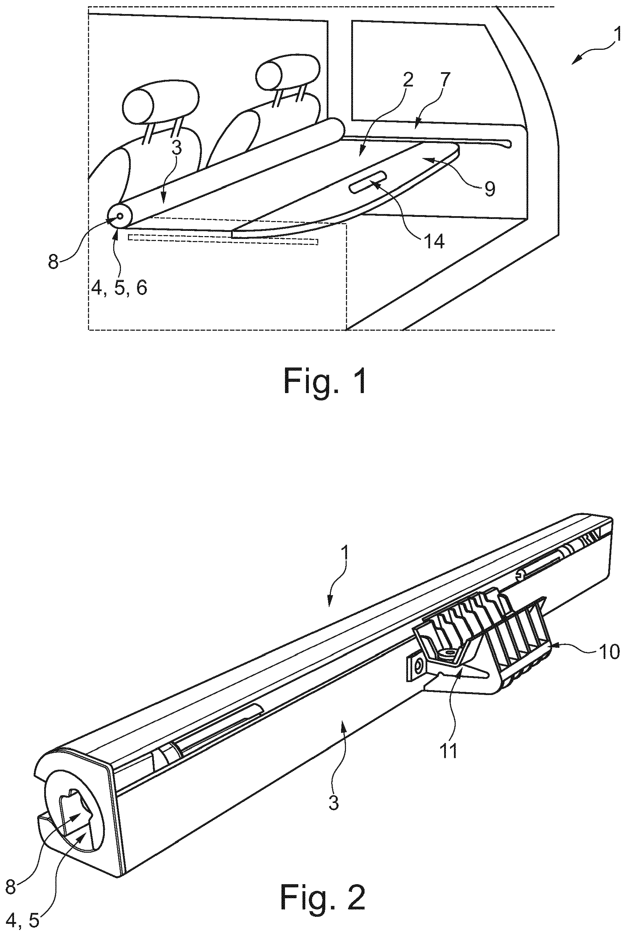

Selon la réalisation représentée en figure 1, la plaque 9 est pourvue en partie médiane d'un orifice 14 de passage d'une main destiné à faciliter sa préhension pour transporter le dispositif 1 une fois démonté du véhicule.

Selon la réalisation représentée, le dispositif 1 comprend un seul couple de moyens d'emboitement réciproques 10,11, ledit couple étant situé en partie médiane dudit dispositif (voir la figure 2).

Selon une variante non représentée, le dispositif 1 comprend deux couples de moyens d'emboitement réciproques 10,11, lesdits couples étant disposés latéralement de part et d'autre dudit dispositif.

Dans ce cas, selon un mode de réalisation particulier, les premiers 10 ou deuxièmes 11 moyens sont disposés sur les embouts 4.

Selon la réalisation représentée, le deuxième moyen 11 est solidaire du carter 3.

Selon la réalisation représentée, le premier moyen 10 est réalisé à base de matériau plastique moulé, ledit moyen présentant en section deux branches 15 reliées entre elles par une zone élastiquement déformable 16 de manière à pouvoir débattre l'une par rapport à l'autre, une desdites branches - notamment les deux - étant pourvue d'une saillie interne 17, le deuxième moyen 11 présentant en section une forme générale de harpon dont un - notamment deux - crochet 18 coopère en butée avec ladite saillie lorsque lesdits moyens sont emboités entre eux, ledit crochet et ladite saillie présentant une forme permettant un déboitement desdits moyens par traction en sens opposé au sens d'emboitement.

Une telle réalisation est évidemment applicable également dans le cas où le dispositif 1 comprend deux - ou davantage de - couples de moyens d'emboitement réciproques 10,11.

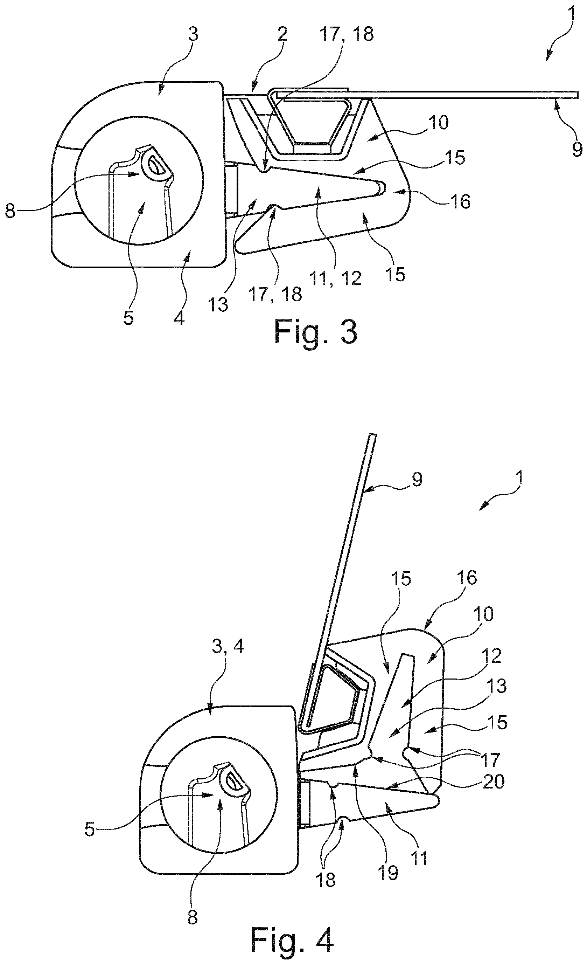

Selon la réalisation représentée, les moyens d'emboitement réciproques 10,11 présentent deux faces 19,20 de réception respectives réciproques permettant, après actionnement par l'utilisateur, une mise en position sensiblement verticale de la plaque 9 quand le rideau 2 est en configuration rétractée (voir la figure 4), de manière à élargir l'ouverture d'accès au compartiment à bagages.

Selon une réalisation, les moyens de fixation 5 et moyens réciproques 6 sont respectivement agencés de sorte que le carter 3 puisse être actionné en rotation selon l'axe de l'arbre 8 pour passer réversiblement d'une position de verrouillage, où lesdits moyens ne peuvent être dissociés les uns des autres, à une position de déverrouillage, permettant de séparer lesdits moyens.

Un tel agencement permet un montage ou démontage du dispositif 1 par simple mise en rotation du carter 2.

Dans ce cas, cette mise en rotation peut aisément être réalisée par appui manuel exercé par l'utilisateur sur la plaque 9.

## Revendications

1. Dispositif (1) de recouvrement d'un compartiment à bagages de véhicule automobile, ledit dispositif comprenant :
• un rideau (2) souple de recouvrement des bagages actionnable entre une configuration déployée de recouvrement et une configuration rétractée de rangement,
• un carter (3) de réception dudit rideau en configuration de rangement,
• deux embouts (4) montés en extrémités dudit carter, lesdits embouts étant chacun pourvu d'un moyen de fixation (5) destiné à coopérer avec un moyen de fixation réciproque (6) prévu en avant d'une ébénisterie (7) latérale respective de garnissage dudit compartiment, afin de permettre une fixation réversible dudit carter sur lesdites ébénisteries,
• un arbre (8) transversal d'enroulement dudit rideau pour le recevoir en configuration rétractée, ledit arbre étant solidaire d'un bord avant dudit rideau, ledit arbre étant monté en rotation par ses extrémités sur lesdits embouts, ledit arbre étant actionné en enroulement par un moyen ressort,
• une plaque (9) de rigidification d'un bord arrière dudit rideau,
• au moins un premier (10) et un deuxième (11) moyen d'emboitement réciproques respectivement solidaires de ladite plaque et dudit carter ou inversement, lesdits moyens étant mis en coopération par mise dudit rideau en configuration rétractée de manière à permettre un maintien de ladite plaque en position sensiblement horizontale,
ledit système étant **caractérisé en ce que** ledit premier moyen présente un logement (12) de réception dudit deuxième moyen, ledit logement étant pourvu d'un goulot d'étranglement (13) élastiquement déformable, ledit deuxième moyen présentant une géométrie agencée pour permettre un élargissement dudit goulot lors de son introduction dans ledit logement et pour permettre un retour dudit goulot en configuration non déformée une fois emboité, de manière à bloquer ledit deuxième moyen dans ledit logement et à permettre un transport dudit dispositif une fois démonté par préhension de ladite plaque.

2. Dispositif selon la revendication 1, **caractérisé en ce que** la plaque (9) est pourvue en partie médiane d'un orifice (14) de passage d'une main destiné à faciliter sa préhension pour transporter ledit dispositif une fois démonté du véhicule.

3. Dispositif selon l'une des revendications 1 ou 2, **caractérisé en ce qu'**il comprend un seul couple de moyens d'emboitement réciproques (10,11), ledit couple étant situé en partie médiane dudit dispositif.

4. Dispositif selon l'une des revendications 1 ou 2, **caractérisé en ce qu'**il comprend deux couples de moyens d'emboitement réciproques (10,11), lesdits couples étant disposés latéralement de part et d'autre dudit dispositif.

5. Dispositif selon la revendication 4, **caractérisé en ce que** les premiers (10) ou deuxièmes (11) moyens sont disposés sur les embouts (4).

6. Dispositif selon l'une quelconque des revendications 1 à 5, **caractérisé en ce que** le deuxième moyen (11) est solidaire du carter (3).

7. Dispositif selon l'une quelconque des revendications 1 à 6, **caractérisé en ce que** le premier moyen (10) est réalisé à base de matériau plastique moulé, ledit moyen présentant en section deux branches (15) reliées entre elles par une zone élastiquement déformable (16) de manière à pouvoir débattre l'une par rapport à l'autre, une desdites branches - notamment les deux - étant pourvue d'une saillie interne (17), le deuxième moyen (11) présentant en section une forme générale de harpon dont un - notamment deux - crochet (18) coopère en butée avec ladite saillie lorsque lesdits moyens sont emboités entre eux, ledit crochet et ladite saillie présentant une forme permettant un déboitement desdits moyens par traction en sens opposé au sens d'emboitement.

8. Dispositif selon l'une quelconque des revendications 1 à 7, **caractérisé en ce que** les moyens d'emboitement réciproques (10,11) présentent deux faces de réception (19,20) respectives réciproques permettant, après actionnement par l'utilisateur, une mise en position sensiblement verticale de la plaque (9) quand le rideau (2) est en configuration rétractée, de manière à élargir l'ouverture d'accès au compartiment à bagages.

9. Dispositif selon l'une quelconque des revendications 1 à 8, **caractérisé en ce que** les moyens de fixation (5) et moyens réciproques (6) sont respectivement agencés de sorte que le carter (3) puisse être actionné en rotation selon l'axe de l'arbre (8) pour passer réversiblement d'une position de verrouillage, où lesdits moyens ne peuvent être dissociés les uns des autres, à une position de déverrouillage, permettant de séparer lesdits moyens.

## Patentansprüche

1. Vorrichtung (1) zum Abdecken eines Kofferraumabteils eines Kraftfahrzeugs, wobei die Vorrichtung Folgendes umfasst:
- einen biegsamen Vorhang (2) zum Abdecken des Gepäcks, der zwischen einer aufgefalteten Abdeckungskonfiguration und einer zurückgezogenen Verstaukonfiguration betätigbar ist,
- eine Verkleidung (3) zum Aufnehmen des Vorhangs in Verstaukonfiguration,
- zwei Ansätze (4) die an Enden der Verkleidung montiert sind, wobei die Ansätze jeweils mit einem Befestigungsmittel (5) versehen sind, das dazu bestimmt ist, mit einem reziproken Befestigungsmittel (6) zusammenzuwirken, das vor einem jeweiligen seitlichen Auskleidungtischlerelement (7) des Abteils vorgesehen ist, um ein umkehrbares Befestigen der Verkleidung auf den Tischlerelementen zu erlauben,
- eine Querwelle (8) zum Aufwickeln des Vorhangs, um ihn in zurückgezogener Konfiguration aufzunehmen, wobei die Welle mit einem Vorderrand des Vorhangs fest verbunden ist, wobei die Welle in Drehung an ihren Enden auf den Ansätzen montiert ist, wobei die Welle beim Aufwickeln von einem Federmittel betätigt wird,
- eine Versteifungsplatte (9) eines hinteren Rands des Vorhangs,
- mindestens ein erstes (10) und ein zweites (11) Mittel zum reziproken Einrasten, die jeweils mit der Platte und der Verkleidung oder umgekehrt fest verbunden sind, wobei die Mittel durch Verstellen des Vorhangs in zurückgezogene Konfiguration derart in Zusammenwirkung gebracht werden, dass ein Halten der Platte in im Wesentlichen horizontaler Position erlaubt wird,
wobei das System **dadurch gekennzeichnet ist, dass** das erste Mittel eine Aufnahme (12) zum Aufnahmen des zweiten Mittels aufweist, wobei die Aufnahme mit einem elastisch verformbaren Engpass (13) versehen ist, wobei das zweite Mittel eine Geometrie aufweist, die eingerichtet ist, um ein Verbreitern des Engpasses bei seinem Einführen in die Aufnahme zu erlauben, und um eine Rückkehr des Engpasses in Konfiguration ohne Verformung nach dem Einrasten zu erlauben, so dass das zweite Mittel in der Aufnahme blockiert ist, und einen Transport der Vorrichtung nach dem Demontieren durch Ergreifen der Platte zu erlauben.

2. Vorrichtung nach Anspruch 1, **dadurch gekennzeichnet, dass** die Platte (9) im mittleren Teil mit einer Durchgangsöffnung (14) einer Hand versehen ist, die dazu bestimmt ist, ihr Ergreifen zum Transportieren der Vorrichtung nach dem Demontieren von dem Fahrzeug zu erleichtern.

3. Vorrichtung nach einem der Ansprüche 1 oder 2, **dadurch gekennzeichnet, dass** sie ein einziges Paar reziproker Einrastmittel (10, 11) umfasst, wobei das Paar im mittleren Teil der Vorrichtung liegt.

4. Vorrichtung nach einem der Ansprüche 1 oder 2, **dadurch gekennzeichnet, dass** sie zwei Paare reziproker Einrastmittel (10, 11) umfasst, wobei die Paare seitlich zu jeder Seite der Vorrichtung angeordnet sind.

5. Vorrichtung nach Anspruch 4, **dadurch gekennzeichnet, dass** die ersten (10) oder zweiten (11) Mittel auf den Ansätzen (4) angeordnet sind.

6. Vorrichtung nach einem der Ansprüche 1 bis 5, **dadurch gekennzeichnet, dass** das zweite Mittel (11) fest mit der Verkleidung (3) verbunden ist.

7. Vorrichtung nach einem der Ansprüche 1 bis 6, **dadurch gekennzeichnet, dass** das erste Mittel (10) auf der Basis eines geformten Kunststoffmaterials hergestellt ist, wobei das Mittel im Querschnitt zwei Schenkel (15) aufweist, die miteinander durch eine elastisch verformbare Zone (16) derart verbunden sind, dass sie zueinander ausschlagen können, wobei einer der Schenkel, insbesondere beide, mit einem inneren Vorsprung (17) versehen sind, wobei das zweite Mittel (11) einen Querschnitt in allgemeiner Form einer Harpune aufweist, von welcher ein, insbesondere beide, Haken (18) im Anschlag mit dem Vorsprung zusammenwirkt / zusammenwirken, wenn die Mittel miteinander eingerastet sind, wobei der Haken und der Vorsprung eine Form aufweisen, die ein Ausrasten der Mittel durch Zug in entgegengesetzte Richtung zu der Einrastrichtung erlaubt.

8. Vorrichtung nach einem der Ansprüche 1 bis 7, **dadurch gekennzeichnet, dass** die reziproken Einrastmittel (10, 11) zwei Aufnahmeflächen (19, 20) aufweisen, die jeweils reziprok sind, die nach dem Betätigen durch den Benutzer ein im Wesentlichen vertikales Inpositionbringen der Platte (9) erlauben, wenn der Vorhang (2) in zurückgezogener Konfiguration ist, um die Zugangsöffnung zu dem Gepäckraum zu erweitern.

9. Vorrichtung nach einem der Ansprüche 1 bis 8, **dadurch gekennzeichnet, dass** die Befestigungsmittel (5) und reziproken Mittel (6) jeweils derart eingerichtet sind, dass die Verkleidung (3) in Drehung gemäß der Achse der Welle (8) betätigt werden kann, um umkehrbar von einer Verriegelungsposition, in der die Mittel nicht voneinander getrennt werden können, zu einer Entriegelungsposition, die das Trennen der Mittel erlaubt, überzugehen.

## Claims

1. Device (1) for covering a luggage compartment of a motor vehicle, said device comprising:
- a flexible curtain (2) for covering luggage, capable of being actuated between a deployed covering configuration and a retracted storage configuration,
- a housing (3) for receiving said curtain in the storage configuration,
- two end pieces (4) mounted at the ends of said housing, each of said end pieces being provided with a fastening means (5) intended to engage with a reciprocal fastening means (6) provided in front of a respective lateral trim part (7) of said compartment, in order to allow said housing to be reversibly fixed onto said trim parts,
- a transverse winding shaft (8) for winding said curtain in order to receive same in the retracted configuration, said shaft being secured to a front edge of said curtain, said shaft being mounted such that it rotates via the ends thereof on said end pieces, said shaft being actuated by winding by a spring means,
- a stiffening plate (9) for stiffening a rear edge of said curtain,
- at least one first (10) and one second (11) reciprocal interlocking means respectively secured to said plate and to said housing or vice-versa, said means being engaged by the placement of said curtain in the retracted configuration so as to allow said plate to be held in a substantially horizontal position,
said system being **characterised in that** said first means has a cavity (12) for receiving said second means, said cavity being provided with an elastically-deformable bottleneck (13), said second means having a geometry that is arranged so as to allow said bottleneck to widen when it is inserted into said cavity and to allow said bottleneck to return to the non-deformed configuration once said interlocked therein, so as to block said second means inside said cavity and allow transportation of said device once removed by the grasping of said plate.

2. Device according to claim 1, **characterised in that** the plate (9) is provided, in the middle portion thereof, with an orifice (14) for the passage of a hand intended to ease the grasping thereof when transporting said device once removed from the vehicle.

3. Device according to either claim 1 or claim 2, **characterised in that** it comprises a single pair of reciprocal interlocking means (10, 11), said pair being situated in the middle portion of said device.

4. Device according to either claim 1 or claim 2, **characterised in that** it comprises two pairs of reciprocal interlocking means (10, 11), said pairs being arranged laterally on either side of said device.

5. Device according to claim 4, **characterised in that** the first (10) or second (11) means are arranged on the end pieces (4).

6. Device according to any of claims 1 to 5, **characterised in that** the second means (11) is secured to the housing (3) .

7. Device according to any of claims 1 to 6, **characterised in that** the first means (10) is made from a cast plastic-based material, said means having a section in the shape of two branches (15) connected to one another via an elastically-deformable area (16) so as to be able to move relative to one another, one of said branches - in particular both thereof - being provided with an inner protrusion (17), the second means (11) having a section in the overall shape of a harpoon, one - in particular two - hook(s) (18) of which engage(s) via abutment with said protrusion when said means are interlocked together, said hook and said protrusion having a shape that allows said means to be disengaged by pulling in the opposite direction to the interlocking direction.

8. Device according to any of claims 1 to 7, **characterised in that** the reciprocal interlocking means (10, 11) have two respective reciprocal receiving faces (19, 20) allowing, after actuation by the user, an arrangement of the plate (9) in a substantially vertical position when the curtain (2) is in the retracted configuration, so as to widen the opening providing access to the luggage compartment.

9. Device according to any of claims 1 to 8, **characterised in that** the fastening means (5) and the reciprocal means (6) are respectively arranged such that the housing (3) can be actuated by rotation along the axis of the shaft (8) in order to reversibly move from a locked position, wherein said means cannot be disconnected from one another, to an unlocked position, allowing said means to be separated.
